# EUROPÄISCHE PATENTANMELDUNG

(11) **EP 3 018 491 A1**
(43) Veröffentlichungstag der Anmeldung: **11.05.2016**
(21) Anmeldenummer: 15401108.4
(22) Anmeldetag: 30.10.2015
(51) Int. Cl.: G01S 7/02, G01S 7/35, G01S 7/40, G01S 13/58, G01S 13/88, G01S 15/88, A01C 17/00

(54) **VERFAHREN ZUR STEUERUNG UND/ODER REGELUNG EINER SENSORANORDNUNG ZUR REDUKTION DES RAUSCHNIVEAUS DIESER SENSORANORDNUNG**

(30) Priorität: 04.11.2014 DE 102014116021
(71) Anmelder: Amazonen-Werke H. Dreyer GmbH & Co. KG, 49205 Hasbergen (DE)
(72) Erfinder: Rahe, Florian, Dr., 49504 Lotte (DE); Wessels, Thomas, 49080 Osnabrück (DE); Ströbel-Fröschle, Markus, 49124 Georgsmarienhütte (DE)

(57) **Zusammenfassung**

Verfahren zur Steuerung und oder Regelung einer Sensoranordnung zur Detektion zumindest eines Parameters eines sich bewegenden Objektes, wobei durch Variation der Frequenz der durch die Sensoranordnung verwendeten elektromagnetischen Strahlung oder Schallwellen eine Reduktion des Rauschniveaus des detektierten Signals ermöglicht wird. Hierbei wird vor allem durch die Abstimmung der verwendeten Frequenzen vorzugsweise zumindest zweier Sensoranordnungen durch einfache Variation der Versorgungsspannung ein Übersprechen der Sensoranordnungen untereinander effektiv verhindert oder minimiert.

## Beschreibung

Die Erfindung betrifft ein Verfahren zur Steuerung und/oder Regelung einer Sensoranordnung zur Reduktion des Rauschniveaus dieser Sensoranordnung gemäß des Oberbegriffs des Patentanspruches 1.

Eine Sensoranordnung zur Messung der Verteilparameter, wie beispielsweise Verteilmenge, Flugrichtung, Geschwindigkeit, Querverteilung oder Ähnliches einer landwirtschaftlichen Verteilmaschine ist beispielsweise in DE19723359A1, EP0751703B1 und EP300580B1 beschrieben. Alle diese Schriften zeigen eine Anordnung von einem oder mehreren Sensoren zur Abtastung des Streugutes einer Verteilmaschine. Da die verwendeten Signale der Sensoranordnung, wie beispielsweise elektromagnetische Wellen oder Ultraschall an einer Vielzahl von Objekten, nicht nur dem zu verteilenden Gut gestreut oder reflektiert werden, ist es wünschenswert den Einfluss dieser störenden Signale auf die Messung zu minimieren und/oder soweit wie möglich zu berücksichtigen. Für eine Anordnung mehrerer Sensoren wird in EP2272312B1 vorgeschlagen, die störenden Einflüsse der Sensoren untereinander durch zeitlich versetzte Messungen zu bewerkstelligen. Eine kontinuierliche Messung mit allen verwendeten Sensoren ist dadurch allerdings ausgeschlossen.

Aufgabe der vorliegenden Erfindung ist es, eine möglichst rauscharme, störungsfreie Messung einer Sensoranordnung zu gewährleisten.

Dies wird in einfacher Weise durch ein Verfahren zur Steuerung und/oder Regelung einer Sensoranordnung gemäß dem Oberbegriff des Patentanspruchs 1 erreicht, indem die Senderfrequenz derart angepasst wird, dass das Signal-zu-Rausch-Verhältnis des Detektorsignals des zumindest einen Detektors erhöht und/oder das Rauschen zumindest eines Detektorsignals reduziert wird. Hierbei ist jeweils eine Reduktion des Rauschens oder Erhöhung des Signal-zu-Rausch-Verhältnisses eines Detektors durch Veränderung der Senderfrequenz des ihm zugeordneten Senders gemeint. Auf diese Weise kann mit einfachen Mitteln einem frequenzabhängigen Rauschen des Detektorsignals begegnet werden. Der Detektor wird hierbei als Teil einer Kombination aus Sender und Detektor oder Empfänger von elektromagnetischer Strahlung oder Ultraschall und der zugehörigen zur Steuerung dieser Komponenten benötigten Elektronik verstanden. Diese Kombination kann auch als Sensor bezeichnet werden, wobei Sender und/oder Empfänger und/oder die zugehörige Elektronik hierbei in einem Bauteil oder auch getrennt angeordnet sein können. In solcher Form werden unter anderem moderne Radarsensoren hergestellt, die im Sensor schon das ausgesendete und empfangene Signal mischen und als Sensorsignal ein Dopplersignal liefern.

In einer vorteilhaften Ausgestaltung der Erfindung, in der die Sensoranordnung aus zumindest zwei Sender-Detektor-Kombinationen besteht, wird die Senderfrequenzen der mindestens zwei Sender der Sender-Detektor-Kombinationen in der Weise aufeinander abgestimmt, dass das Signal-zu-Rausch-Verhältnis eines oder mehrerer Detektorsignale erhöht und/oder das Rauschen zumindest eines Detektorsignals reduziert wird. Auf diese Weise kann für eine Kombination aus mehreren Sensoren die Frequenz der den Sensoren zugeordneten Sender für die verwendeten Wellen, beispielsweise Radarstrahlen oder Ultraschallwellen, so abgestimmt werden, dass die Frequenzen der Sender sich ausreichend unterscheiden, damit nicht die Signale, welche von einem Sensor, bestehend aus einer Sender-Empfänger-Kombination, ausgesandt werden, von einem anderen Sensor oder anders ausgedrückt, dem einem Sensor zugeordneten Empfänger oder Detektor als Störsignal wahrgenommen werden. Somit kann für eine Kombination aus zumindest einem ersten und einem zweiten Sensor ein störender Einfluss des beispielsweise dem ersten Sensor zugeordneten Senders auf den dem zweiten Sensor zugeordneten Detektor unterbunden werden.

In einer vorteilhaften Weiterbildung der Erfindung erfolgt die Abstimmung der Frequenz zumindest eines Senders über eine Variation der Versorgungsspannung dieses zumindest einen Senders. Auf diese Weise kann mit einfachen Mitteln eine Regelung der Senderfrequenz des betreffenden Senders erreicht werden. Erfindungswesentlich ist in diesem Zusammenhang nicht, dass bei einer Kombination aus verschiedenen Sensoren die Versorgungsspannung aller Sender sich unterscheidet. Insbesondere kann auch eine für alle gleiche Versorgungsspannung auf Grund leicht unterschiedlicher Eigenschaften der einzelnen Sender oder sich unterscheidender Umgebungsbedingungen, wie beispielsweise Temperatur, zu einer unterschiedlichen Frequenz der elektromagnetischen Strahlung oder der Schallwellen führen. Eine pauschal unterschiedliche Versorgungsspannung für verschiedene Sensoren reicht daher für die Minimierung der Rauschniveaus nicht aus, vielmehr muss zu Beginn des jeweiligen Arbeitsgangs, beispielweise nach dem Erreichen des Feldes, auf dem das Streugut ausgebracht werden soll, und/oder in festgelegten Abständen und/oder bei Überschreitung eines Grenzwertes des Rauschniveaus und/oder Unterschreiten eines Grenzwertes des Signal-zu-Rausch-Verhältnisses der Störeinfluss der Sensoren untereinander überprüft und die Spannung und damit einhergehend die Frequenz entsprechend justiert werden.

In einer vorteilhaften Weiterbildung der Erfindung erfolgt die Reduktion des Rauschens des zumindest einen Detektorsignals auf der Basis zumindest einer Referenzmessung, welche durchgeführt wird, während kein relativ zur Sender-Detektor-Kombination sich bewegendes Objekt detektiert wird. Im Rahmen einer solchen Referenzmessung kann somit die Charakterisierung des Rauschsignals und die Justage der Versorgungsspannung im Hinblick auf die Sendefrequenzen der einzelnen Sensoren vorgenommen werden. Somit lässt sich verhindern, dass beispielsweise ein Dopplersignal von sich bewegenden Objekten fälschlicherweise als erhöhtes Frequenzrauschen in der Peripherie der durch den oder die Detektoren detektierten Senderfrequenz interpretiert wird.

In einer möglichen Weiterbildung der Erfindung führt jede der zumindest einen Sender-Detektor-Kombination autark die Steuerung der Senderfrequenz des zu dieser Sender-Detektor-Kombination gehörigen Senders zur Verbesserung des Signal-zu-Rausch-Verhältnisses und/oder Reduktion des Rauschens des zu dieser Sender-Detektor-Kombination gehörigen Detektors durch. Beispielsweise kann bei Überschreiten eines oberen Schwellwertes für das Rauschniveau die Spannung in einem bestimmten Spannungsbereich, beispielsweise 0,25 V ober- und unterhalb der Normspannung des Sensors in Schritten von beispielweise 0,05 V variiert werden, solange bis das Rauschniveau unter einen unteren Schwellwert, beispielsweise ein Zehntel des Signalpegels von sich bewegenden Objekten fällt. Hiermit lässt sich also ein minimales Rauschen einer jeder Sender-Detektor-Kombination erreichen.

In einer vorteilhaften Weiterbildung der Erfindung führt die Steuerung der Senderfrequenz zumindest einer der zumindest zwei Sender zentral, beispielweise von einer der Sender-Detektor-Kombinationen bzw. einer ihr zugeordneten Elektronik durch, so dass das Signal-zu-Rausch-Verhältnis eines oder mehrerer Detektorsignale erhöht und/oder das Rauschen eines oder mehrerer Detektorsignale reduziert wird. Auf diese Art und Weise wird für eine Kombination aus zumindest zwei Sender-Detektor-Kombinationen ein gegenseitiges Beeinflussen der Sender-Detektor-Kombinationen durch gleichzeitige Änderung mehrerer Senderfrequenzen verhindert und eine einfachere und/oder schnellere Regelung der einzelnen Senderfrequenzen durch eine zentrale Einheit, beispielweise einen sogenannten Master-Sensor im Unterschied zu den übrigen, ungeregelten, sogenannten Slave-Sensoren, ermöglicht. Hierbei kann sich der Master-Sensor von den anderen Sensoren in Art und/oder Aufbau unterscheiden, dies ist jedoch nicht erfindungswesentlich. Vielmehr kann beispielsweise allein die Position oder die Verkabelung einen bestimmten Sensor als Master-Sensor auszeichnen, die Sensoren ansonsten aber gleichwertig sein. Es könnte also durch einfache Änderung der Verkabelung in diesem Beispiel ein anderer als der ursprüngliche Sensor als Master-Sensor ausgezeichnet werden. Jeder der Sensoren könnte in diesem Ausführungsbeispiel also die Aufgabe des Master-Sensors übernehmen.

In einer vorteilhaften Ausgestaltung der Erfindung handelt es sich bei dem Objekt um die Streupartikel des Streugutes einer landwirtschaftlichen Verteilmaschine, dessen zumindest einer Verteilparameter, wie beispielsweise die Querverteilung oder die Wurfrichtung mittels der Sensoranordnung bestimmt wird. Somit kann mittels vorzugsweise mehrerer Sensor-Detektor-Kombinationen beispielsweise die Umfangsverteilung oder der mittlere Abwurfwinkel der Partikel gemessen werden, wobei das erfindungsgemäße Verfahren ein möglichst hohes Signal-zu-Rausch-Verhältnis und/oder ein niedriges Rauschniveau ermöglicht.

Weitere Einzelheiten der Erfindung sind der Beispielsbeschreibung zu entnehmen. Die Zeichnungen zeigen
- Fig.1: ein Düngerstreuer mit zwei Sensoranordnungen in perspektivischer Ansicht sowie die Reflexion eines Sensorsignals am Untergrund und
- Fig.2: ein Düngerstreuer mit zwei Sensoranordnungen nach Fig. 1 in Ansicht von oben und Reflexion eines Sensorsignals beispielhaft an einem Partikel aus einer Vielzahl von abgeworfenen Partikeln.

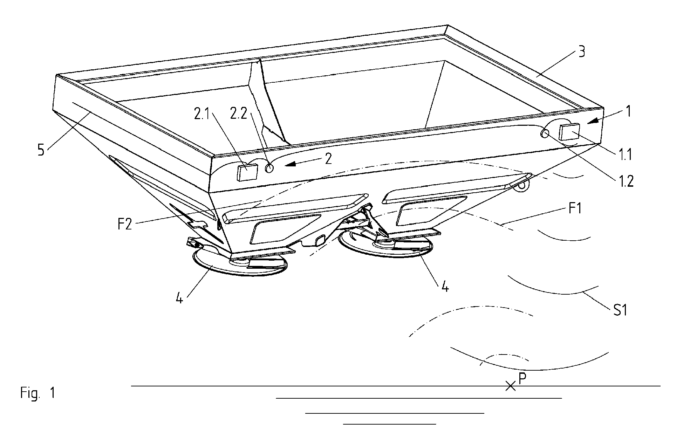

In Fig. 1 sind beispielhaft zwei Sensoranordnungen 1 und 2, welche jeweils aus einem Sender elektromagnetischer Wellen 1.1 sowie 2.1 und jeweils einem entsprechenden Detektor elektromagnetischer Wellen 1.2 sowie 2.2 bestehen, dargestellt. Sowohl dem Detektor, als auch dem Sender kann überdies eine Elektronik zur Steuerung zugeordnet sein, welche sich im selben Bauteil oder außerhalb befinden kann. Beide Sensoranordnungen sind hier beispielhaft an einem Schleuderstreuer 3 mit zwei Schleuderscheiben 4 angeordnet und derart ausgerichtet, dass die zumindest überwiegende Anzahl der verteilten Streugutpartikel auf ihrer Flugbahn zumindest einen der Detektionsbereiche der beiden Sensoren passiert. Hierbei ist nicht erfindungswesentlich, dass es sich um genau zwei Sensoren handelt. Es können auch mehr als zwei Sensoranordnungen oder eine Sensoranordnung durch das erfindungsgemäße Verfahren gesteuert und/oder geregelt werden. Zur Durchführung des Verfahrens sind die Sensoranordnungen 1 und 2 hier mittels eines Kabels 5 miteinander und mit einem hier nicht dargestellten Jobrechner des Schleuderstreuers oder eines Zugfahrzeugs in bekannter Weise verbunden. Die Verbindung kann jedoch auch über beliebige andere Datenübertragungsverfahren hergestellt werden, beispielsweise über eine drahtlose Funk-, Bluetooth- oder WLan-Verbindung.

Zur Minimierung des Rauschniveaus kann nun vorteilhaft vor der Detektion der sich bewegenden Objekte, hier beispielhaft der durch die Schleuderscheiben 4 eines Düngerstreuers 3 ausgebrachten Streupartikel, eine Referenzmessung durchgeführt werden, um durch Variation der Frequenz der durch die Sensoranordnung ausgesendeten elektromagnetischen Wellen das Rauschniveau der zumindest einen Sensoranordnung zu reduzieren. Hierdurch kann bei nur einer Sensoranordnung einem erhöhten Rauschen, hervorgerufen durch externe Störquellen, durch Variation der Senderfrequenz begegnet werden. Bei mehr als einer Sensoranordnung, hier beispielhaft zwei Sensoranordnungen 1 und 2, kann durch Frequenzvariation der jeweiligen Sender 1.1 und 2.1 zusätzlich ein Übersprechen der Signale eines Senders 1.1 einer ersten Sensoranordnung 1 auf den Detektor 2.2 einer zweiten Sensoranordnung 2 verhindert werden. Dafür wird vorzugsweise bei gegenüber dem Untergrund unbewegten Sensoren eine Referenzmessung derart durchgeführt, dass vorzugsweise ein erster Sender 1.1 aktiviert ist, also elektromagnetische Wellen aussendet und das Detektorsignal des Detektors 2.2 der anderen Sensoranordnung 2, hinsichtlich des Rauschniveaus untersucht wird. Hierbei werden die durch den Sender 1.1 ausgesendeten elektromagnetischen Wellen S1 an einem Objekt, in diesem Fall einer Stelle des Untergrundes P wie F1 und F2 gestreut, so dass sie beispielsweise sowohl den Detektor 2.1 als auch Detektor 2.2 erreichen. Die elektromagnetischen Wellen können ebenso an dem Düngerstreuer oder anderen Objekten gestreut werden. Für die Minimierung des Rauschniveaus und/oder die Optimierung des Signal-zu-Rausch-Verhältnisses ist es nun entscheidend, dass die Frequenz, welche durch den Sender und den Detektor einer Sensoranordnung verwendet wird, ausreichend von der Frequenz aller anderen verwendeten Sensoranordnungen und/oder externer Störsignale abweicht. Hierfür wird mittels einem auf einem oder mehreren Sensoranordnungen und/oder auf einem mit den Sensoren verbundenen Jobrechner gespeicherten Programm die durch den Sensor verwendete Frequenz, vorzugsweise mittels Variation der Steuerspannung des Sensors, so lange variiert, bis das Rauschniveau aller anderen Sensoren beispielweise unter einen Grenzwert gefallen ist. Alternativ wird beispielsweise die Steuerspannung über einen gewissen Bereich variiert und anschließend die Steuerspannung verwendet, welche im Mittel aller Sensoren das niedrigste Rauschniveau erreichte.

Die Einstellung der Frequenz der Sensoranordnungen während einer Referenzmessung vermeidet die Notwendigkeit das durch einen ersten Detektor gemessene Signal sich bewegender Objekte, welches als Dopplersignal, das bedeutet als frequenzverschobenes Signal, des dem ersten Detektor zugeordneten ersten Sensors gemessen wird von einem eventuell ebenfalls in diesem Frequenzbereich sich befindlichen störenden Signal, beispielsweise eines zweiten Senders einer anderen Sensoranordnung, zu unterscheiden.

Für dieses Verfahren kann vorgesehen sein, dass die Frequenz- bzw. Steuerspannungsanpassung beispielsweise nacheinander für alle vorhandenen Sensoranordnungen durchgeführt und in vorteilhafter Weise durch einen sogenannten Mastersensor oder beispielsweise einen Jobrechner gesteuert wird, so dass eine gegenseitige Beeinflussung des Verfahrens bei gleichzeitiger Steuerspannungsvariation verschiedener Sensoren vermieden wird.

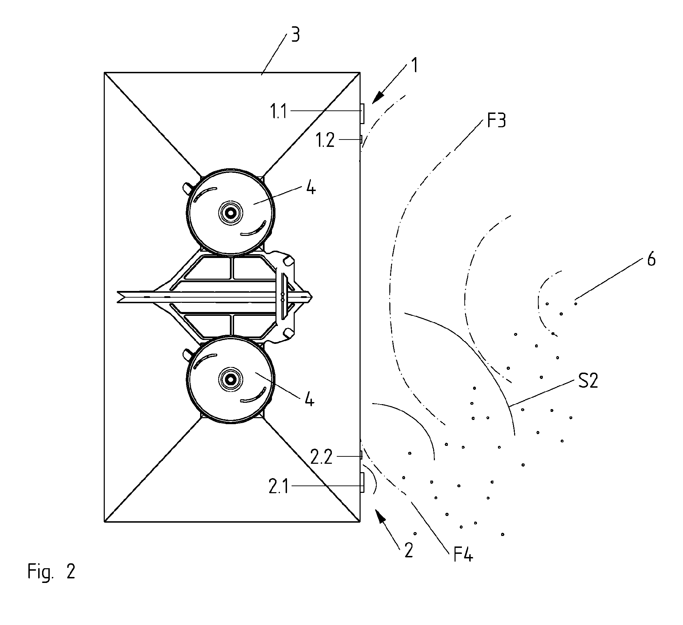

Werden nun mittels der am Düngerstreuer 3 angeordneten Schleuderscheiben 4 Streupartikel abgeworfen, wie dargestellt in Fig. 2, so kann mittels der verwendeten elektromagnetischen Sensoren 1 und 2, beispielsweise Radarsensoren, beispielsweise der mittlere Abwurfwinkel oder die Umfangsverteilung oder die mittlere Geschwindigkeit der Partikel detektiert werden. Hierbei erfährt das detektierte zuvor beispielsweise an dem sich bewegenden Düngerpartikel 6 gestreute oder reflektierte Signal auf Grund des Dopplereffektes eine Frequenzänderung. Die von dem Sender 2.1 der Sensoranordnung 2 ausgesendeten elektromagnetischen Wellen S2 werden an dem Düngerpartikel 6 reflektiert und/oder gestreut und das Dopplersignal F4 von dem Detektor 2.2 der Sensoranordnung 2 empfangen. Überdies kann das Signal S2 an dem Düngerpartikel 6 in Richtung der Sensoranordnung 1 gemäß dem Verlauf des Signals F3 gestreut werden. Für den Fall, dass die Frequenz des Senders 2.1 nah bei der Frequenz des Empfängers 1.2 liegt, kann es so zu einer falschen Interpretation der durch den Detektor 1.2 gemessenen Signale kommen. Dieser Effekt kann durch das zuvor beschriebene Einstellverfahren basierend auf der zuvor beschriebenen Referenzmessung vermieden oder zumindest reduziert werden. Es kann jedoch auch eine Anpassung der Senderfrequenzen des zumindest einen Senders während der regulären Messung sich bewegender Objekte durchgeführt werden, wobei die Interpretation der detektierten Signale und/oder Regelung und/oder Steuerung der Senderfrequenzen durch die sich bewegenden Objekte erschwert wird.

Auch kann es notwendig sein, in festgelegten Intervallen von beispielsweise 30 min eine Überprüfung und unter Umständen Reduktion des Rauschniveaus und/oder Verbesserung des Signal-zu-Rausch-Verhältnisses im Rahmen einer Referenzmessung oder während der Detektion sich bewegender Objekte durchzuführen, da beispielsweise Temperaturschwankungen der Sensoranordnungen zu driftenden Sensorfrequenzen führen können.

Das erfindungsgemäße Verfahren ist nicht auf die hier beschriebene beispielhafte Ausgestaltung beschränkt. So kann es auch für die Detektion anderer Objekte als die hier beispielhaft angeführten Düngerpartikel, verteilt mittels eines Düngerstreuers, angewendet werden. Auch ist denkbar, dass die Variation der Frequenz der Sensoranordnungen für jeden Sensor individuell und nicht notwendigerweise durch einen Master-Sensor gesteuert durchgeführt wird. Auch ist es möglich das Verfahren auf mehr als zwei Sensoren oder nur einen Sensor anzuwenden, wobei durch Frequenzvariation des einen Sensors der Einfluss externer Störquellen minimiert oder zumindest reduziert werden kann. Auch kann vorgesehen sein, das Verfahren nicht in bestimmten Zeitintervallen zu wiederholen sondern sobald das Rauschniveau einen Grenzwert überschritten oder das Signal-zu-Rausch-Verhältnis einen Grenzwert unterschritten hat.

## Patentansprüche

1. Verfahren zur Steuerung und/oder Regelung einer Sensoranordnung (1,2) zur Detektion zumindest eines Parameters, wie der Position, der Geschwindigkeit und/oder anderer Parameter, zumindest eines sich bewegenden Objektes (6) bestehend aus zumindest einer Sender-Detektor-Kombinationzur Detektion von elektromagnetischen Wellen, vorzugsweise Radarstrahlen, oder Schallwellen **dadurch gekennzeichnet, dass**
die Senderfrequenz des zumindest einen Senders (1.1, 2.1) derart angepasst wird, dass das Signal-zu-Rausch-Verhältnis des Detektorsignals des zumindest einen Detektors (1.2, 2.2) erhöht und/oder das Rauschen zumindest eines Detektorsignals reduziert wird.

2. Verfahren nach Anspruch 1, **dadurch gekennzeichnet, dass** die Sensoranordnung (1, 2) aus zumindest zwei Sender-Detektor-Kombinationen besteht und die Senderfrequenzen der mindestens zwei Sender (1.1, 2.1) der Sender-Detektor-Kombinationen in der Weise aufeinander abgestimmt werden, dass das Signal-zu-Rausch-Verhältnis eines oder mehrerer Detektorsignale erhöht und/oder das Rauschen zumindest eines Detektorsignals reduziert wird.

3. Verfahren nach Anspruch 1 oder 2, **dadurch gekennzeichnet, dass** die Abstimmung der Frequenz zumindest eines Senders (1.1, 2.1) über eine Variation der Versorgungsspannung dieses zumindest einen Senders erfolgt.

4. Verfahren nach zumindest einem der Ansprüche 1 bis 3, **dadurch gekennzeichnet, dass** die Reduktion des Rauschens des zumindest einen Detektorsignals auf der Basis zumindest einer Referenzmessung erfolgt, welche durchgeführt wird, während kein relativ zur Sender-Detektor-Kombination (1, 2) sich bewegendes Objekt (6) detektiert wird.

5. Verfahren nach zumindest einem der Ansprüche 2 bis 4, **dadurch gekennzeichnet, dass** jede Sender-Detektor-Kombination (1, 2) autark die Steuerung der Senderfrequenz des zu dieser Sender-Detektor-Kombination (1, 2) gehörigen Senders (1.1, 2.1) zur Verbesserung des Signal-zu-Rausch-Verhältnisses und/oder Reduktion des Rauschens des zu dieser Sender-Detektor-Kombination (1, 2) gehörigen Detektors (1.2, 2.2) durchführt.

6. Verfahren nach einem der Ansprüche 2 - 4, **dadurch gekennzeichnet, dass** die Steuerung der Senderfrequenz zumindest einer der zumindest zwei Sender (1.1, 2.1) zentral, vorzugsweise von einer der Sender-Detektor-Kombinationen (1,2) bzw. einer ihr zugeordneten Elektronik durchgeführt und so das Signal-zu-Rausch-Verhältnis eines oder mehrerer Detektorsignale erhöht und/oder das Rauschen eines oder mehrerer Detektorsignale reduziert wird.

7. Verfahren nach zumindest einem der vorangegangenen Ansprüche, **dadurch gekennzeichnet, dass** es sich bei dem Objekt um die Streupartikel des Streugutes einer landwirtschaftlichen Verteilmaschine (3) handelt, dessen zumindest einer Verteilparameter, wie beispielsweise die Querverteilung oder die Wurfrichtung mittels der Sensoranordnung bestimmt wird.
